# EUROPEAN PATENT APPLICATION

(11) **EP 1 004 434 A2**
(43) Date of publication of application: **31.05.2000**
(21) Application number: 99123011.1
(22) Date of filing: 19.11.1999
(51) Int. Cl.: B32B 21/06, B32B 21/13, E04F 15/02, B32B 31/20, B32B 31/04

(54) **A covering structure, for example, for floorings, a method for the manufacture thereof, and an intermediate product of the method**

(30) Priority: 23.11.1998 IT TO980981
(71) Applicant: Mondo S.p.A., 12060 Gallo d'Alba (Cuneo) (IT)
(72) Inventor: Stroppiana, Fernando, 12060 Grinzane Cavour (Cuneo) (IT)
(74) Representative: Gerbino, Angelo

(57) **Abstract**

A covering structure comprising, in a generally symmetrical arrangement:
- a core layer (2) of bonded wood-based material having two opposed faces,
- two veneer layers (3) glued (4) to the opposed faces of the core layer (2), respectively, and
- two layers (5), impregnated with resin which can be hardened, and applied to the veneer layers (3), respectively.

## Description

The present invention relates to covering structures and has been developed with particular attention to its possible use for the production of floorings, for example, in the form of strip or tile floorings.

In the coverings field, particularly with regard to floorings, extensive research directed towards identifying alternative products to conventional covering materials such as stone, ceramic or clay materials (and similar products) or to wood coverings (strips, parquet, etc.) has been in progress for some years.

The advantages sought, in comparison with these conventional solutions, are both of an economic nature (production of coverings which are less expensive for given final characteristics) and of a technical and applicational nature: for example, the production of coverings which can be applied without the need to remove pre-existing coverings, and/or which are non-inflammable or fire-resistant, and/or of particularly light weight, or possibly which can adapt, at least to a certain extent, to the characteristics of the substructure (for example, for covering curved surfaces, etc.).

A first line of research is directed towards the production of coverings based on resins (rubber, various synthetic and artificial resins, etc.). These coverings usually have excellent mechanical and physical characteristics as well as being inexpensive and having an ample capacity to adapt to the substructure (even on curved surfaces and/or on pre-existing coverings which are not removed). An intrinsic limitation of these coverings lies in the greater or lesser degree of plasticity of the materials of which they are made, which may give rise to wear phenomena such as scratching, becoming opaque, the formation of imprints by objects bearing on the covering (for example, feet of furniture or shoe heels, etc.).

Another line of research which has been found particularly fruitful is that of laminated materials, such as, for example, melamine laminates and the like which are currently used, amongst other things, for covering furniture and various fittings. These laminated coverings have been found very suitable for use in difficult conditions, for example, for the production of kitchen work-surfaces, laboratory benches and office desks, etc. In particular, they show an excellent degree of resistance to mechanical stresses (scratching, impressions, etc.), to thermal stress (typical example: the placing of a hot container on a kitchen work-surface or table top), and also to chemical agents, even in the presence of particularly aggressive products (acids, etc.).

It is precisely this excellent resistance in difficult conditions of use which has suggested the use of laminated materials also for the production of floorings, for example, in the form of strip floorings which can be laid on pre-existing floorings. Various covering materials, particularly floorings, in which the walking surface is constituted by a laminate such as a melamine laminate are in fact known commercially.

The laminates in question are usually produced by the superimposition of several layers of sheet material of which the upper layer may be printed with designs conferring a decorative appearance on the laminate. A so-called "overlay" layer is then also superimposed on the sandwich thus formed, to define a wearing surface. These layers of sheet material are impregnated separately with resin such as melamine resin and is then subjected to a final hot pressing treatment. Precisely because of their layered structure and the manufacturing process, these laminates usually show the presence of latent stress states which are translated, in normal conditions of use, into a tendency - on the part of the laminate - to bend (or, as is often said, to "bow") which may also result in deformation of the substructure to which the laminate is applied.

This disadvantage is not noticed so much if the covering is applied to a solid object, for example, to a kitchen work-surface or to a table top which has an intrinsic resistance to deformation, but becomes appreciable in applications such as, for example, floorings, where - to produce covering elements (strips or tiles) of limited thickness and weight - it is current practice to apply the laminate to a substrate constituted, for example, by a chipboard material. At the production level, this may take place either by the application of the already-formed laminate to the substrate, for example, by gluing, or by placing the sheets which are to form the laminate on the substrate and bringing about both the formation of the laminate and its connection to the substrate by the simultaneous application of heat and pressure.

In this context, it is current practice to apply - to the face of the substrate remote from the face to which the laminate is applied - a balancing layer which may advantageously be constituted by another laminate (possibly without the decorative layer).

However, this solution cannot be considered optimal for various reasons.

In the first place, most substrates usable in this context are usually hygroscopic. This explains why, in most cases, the use of laminate-based coverings is not advisable in any situations (particularly in floorings) in which the covering is exposed to possible infiltration of moisture, water or other liquids.

In the second place, particularly for flooring applications, the assembly constituted by the laminate, the balancing layer and the substrate interposed between the two may result in a surface which is particularly noisy to walk on, especially when used as floating flooring.

Moreover, at least in some cases, the use of a structure of the type specified above conflicts with the need to enable the elements making up the covering (typically strips or tiles) to be fitted together in a generally male-and-female configuration; this is because most of the above-mentioned substrates are unsuitable for the processing which is required to achieve a restrained-coupling capability.

To overcome the above-mentioned disadvantages, in Italian patent No. 1284823, assigned to the company making the present application, the solution has been proposed of forming a covering structure usable to produce floorings comprising elements such as strips or tiles, comprising a first layer based on resin which can be hardened, and applied to a substrate constituted by a polyolefin matrix with a dispersed vulcanized-rubber phase. A balancing layer is applied to the opposite side of the substrate. The structure is preferably manufactured in an integrated process which simultaneously brings about both hardening of the resin and firm connection of the layers.

However, increasing sensitivity to problems connected with concern for the environment and, in general, the protection of a healthy environment, prompts a search for further improvements to this solution, particularly with regard to the possibility of producing coverings which, whilst showing excellent characteristics of use, also show a considerable degree of environmental compatibility, both with regard to the manufacturing process and in connection with the possible release of substances into the environment in which they are fitted.

According to the present invention, this requirement is satisfied by means of a covering structure having the specific characteristics recited in the following claims. The invention also relates to a method of manufacturing a structure of this type, as well as to an intermediate product of the method of manufacture.

The invention will now be described, purely by way of non-limiting example, with reference to the appended drawings, in which:
Figure 1 is a general, exploded view showing the structure of a covering according to the invention, in section,
Figure 2 shows, in section, an intermediate element of the method of manufacturing the covering structure according to the invention, and
Figure 3 shows, again in section, the final appearance of a covering structure produced in accordance with the invention.

In the appended drawings, the covering structure according to the, invention, indicated 1, is shown basically in the form of a continuous structure. The covering according to the invention is intended to be highly suitable for being divided up (particularly for flooring applications) into elements such as strips and/or tiles, possibly having - along their peripheries - complementary male and female elements which enable then to be fitted together. This is in accordance with known criteria (conventional wood strip floorings may be taken by way of example) which do not need to be described in greater detail herein and, moreover, are not relevant for the purposes of an understanding of the invention.

In the embodiment shown in the drawings, the structure 1 according to the invention is produced from a core layer 2, typically constituted by a sheet of bonded wood-based material. The term "bonded wood-based material" is intended to define herein, in general, all materials made of woody material in fragmented form (fibres, chips, various particles, etc.) held together by a binder. In the currently-preferred embodiment of the invention, the binder in question is a urea-formaldehyde resin; in particular, material with a formaldehyde content (measured by EN120) of less than 10 mg/100 g is used.

Even more preferably, the bonded wood-based material in question is produced in the form currently known as MDF or HDF (acronyms of the terms medium-density fibre or high-density fibre), typically with a density of between 700 and 900 kg/m³. The above-mentioned materials are currently used in the art and their identification is therefore quite clear to an expert in the art. These bonded materials are characterized in particular in that they combine the characteristics of a natural material such as wood with good moisture-resistance properties.

Two veneer layers 3 are applied to the two opposed surfaces of the core layer 2 and are constituted by slices of wood, preferably not impregnated with resin, and having a weight variable, for example, between approximately 300 and 600 g/m² and a thickness which is also variable, between approximately 5 and 8 tenths of a millimetre, according to the type of wood used. The two veneer layers 3 are preferably applied to the two opposed faces of the core layer 2 by means of adhesive, particularly by the application of layers of glue 4 constituted, for example, by vinyl or urea/formaldehyde glue.

In the first place, the application of the two veneer layers 3 to the opposed faces of the core layer 2 fulfils a structural function, giving rise to a "balanced" symmetrical structure in the sandwich constituted by the core layer 2 and by the two veneer layers 3 applied thereto. The stress states which may develop in the core layer 2, in the veneer layers 3 and in the interfaces between the core layer 2 and the veneer layers 3 thus appear as essentially local phenomena which, owing to the intrinsic symmetry of the structure, are distributed absolutely identically and symmetrically so as to counterbalance one another very precisely. In other words, the development of the above-mentioned stress states does not result in any phenomena such as could give rise to deformation (bowing) of the sandwich structure thus formed.

In the preferred embodiment, the gluing operation takes place at a temperature of about 100-120°C and at a pressure of 5-10 kg/cm².

In particular, it will be appreciated that the two veneer layers 3 have strictly symmetrical characteristics which are difficult to achieve by the arrangement of two layers having different characteristics and different natures - even if the arrangement is symmetrical about a central core layer.

Moreover, the adhesive connection by means of glue can ensure an intimate connection, distributed uniformly over the entire area of the structure 1, between the core layer 2 and the two veneer layers 3.

Two further layers, indicated 5, are applied, again with a generally symmetrical distribution, to the two opposed faces of the veneer layers 3 facing outwards relative to the core layer 2.

Both of the layers 5 are made of a laminar material, preferably based on cellulosic paper (referred to in the art as "overlay"), impregnated with resin which can be hardened. Typically, this is a resin which can be hardened by heat treatment under pressure such as, for example, one or more melamine hardening resins.

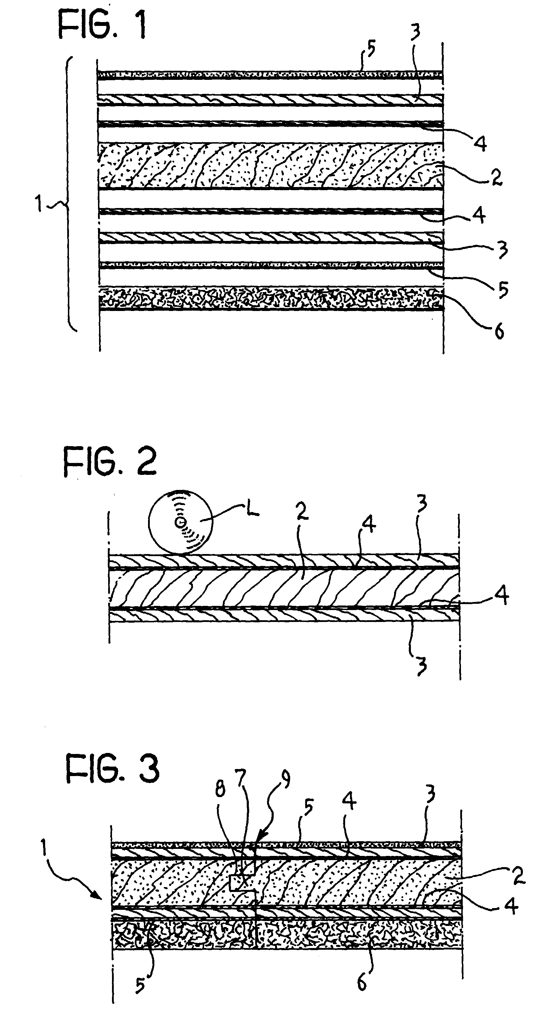

In particular, the selection of materials constituting the layers 5 and, in particular, that which is to face outwards relative to the structure 1 in the position of use (in practice, the layer 5 situated at the top in the view of Figures 1 and 3), is made in a manner such as to ensure a high degree of transparency after the hardening treatment so that the underlying veneer layer 3 is clearly visible from the exterior.

Whilst different selections, for example, phenol-formaldehyde resins, etc., are possible, at least in principle, the use of a melamine resin seems greatly preferable from the point of view of environmental acceptability. This also applies to the desired characteristics of transparency after the hardening treatment.

Typically, the sheets 5 may be constituted by sheets based on α-cellulose and/or kraft paper having a weight per unit area typically of between 120 and 200 g/m².

The nature of each layer 5 is such that, after the heat treatment under pressure, the layer 5 is intimately connected to the outer faces of the wood veneer layers 3 with the dual effect of rendering these outer faces resistant to mechanical stresses and, at the same time, visible from the exterior, with a particularly pleasing aesthetic effect due to the fact that the appearance of the composite material produced is difficult to distinguish (and in practice is indistinguishable, irrespective of observation distance) from the appearance of a strip covered with a layer of wood, or of a solid wood strip.

Finally, a base layer, indicated 6, (the presence of which, however, is optional) is made, in the currently-preferred embodiment, from a layer of cork with a thickness, for example of between 2 and 5 mm and a weight of approximately 60 - 150 g/m².

The function of the cork layer 6 (which is intended to be applied to the face of the structure 1 which is hidden from view in the final arrangement of use; for example, in the case of a flooring, this is the face which is to face towards the laying substrate), is basically to insulate the structure 1 mechanically from the laying substrate. For example, in the case of a flooring, the function of the layer 6 is basically to reduce walking noise.

The method for the manufacture of the flooring according to the invention comprises basically two successive stages or cycles.

The first stage basically leads to the application of the two veneer layers 3 to the two faces of the core layer 2 by means of adhesive.

This step usually involves the spreading of the two opposed faces of the core layer 2 with a film of glue, the subsequent application of the veneer layers 3, and their consolidation in the position of adhesive connection, preferably performed under pressure, for a period of time sufficient to bring about hardening of the layers of glue 4. An operation of this type may be achieved, for example, by a linear press of the type currently used in the furniture industry to apply layers of laminate to one or both faces of a layer of chipboard material so as to produce the product currently known as "faced chipboard".

The outer faces of the veneer layers 3, or at least the outer face of the veneer layer 3 which is to face outwardly in the final structure 1 (in the embodiment shown in the drawings, the outer face of the veneer layer 3 which is shown at the top), is then preferably subjected to a surface finishing step performed, for example, by a sander L, so as to minimize the surface roughness of this face.

The material resulting from this step constitutes an intermediate product of the method for the manufacture of the structure according to the invention. In particular, this intermediate product may be produced in a first plant in order then to be stored and/or transferred, even at a later date, to another plant (possibly located in a different geographical position from the first plant) where the second stage of the method for the manufacture of the structure according to the invention is performed.

The second stage involves basically the application of the resin-impregnated sheets 5 to the two outer faces of the veneer layers 3 and possibly the application of a cork base layer 6.

The layers 5 (and the layer 6 if it is present) are first of all placed against the intermediate product constituted by the core layer 2 and by the veneer layers 3 glued thereto, and are then subjected (in a hot press of known type) to treatment by the application of heat and pressure which lead to hardening of the resin and corresponding intimate connection of the layers 5 to the outer faces of the veneer layers 3. Owing precisely to the change in the physical state to which the resin impregnating the layers 5 is subjected during the heat treatment under pressure, this treatment can also fix the cork layer 6 firmly to the outer face of the adjacent layer 5. This takes place without the need to provide suitable fixing means (for example, a further layer of adhesive).

As stated above, the two layers 5 are preferably absolutely identical to one another, thus ensuring that the assembly formed by the core layer 2, the two veneer layers 3, and the impregnated layers 5 is completely symmetrical. This is achieved, even though there may be provision for the addition, to the layer 5 which is to constitute the outer layer (the so-called "overlay") of the structure 1, of a material such as corundum for further improving the mechanical strength of this layer.

This layers which is used as the outer layer which, in the example of a flooring material is to be walked on, may be provided in a transparent but coloured variant in order to achieve a uniform shade of the final colour of the type of wood used.

In a typical embodiment, the structure 1 according to the invention has a thickness (when the cork layer 6 is present) of the order of 8-10 mm with a weight per unit of area of the order of 6500-8500 g/m².

In particular, a flooring according to the invention has the following characteristics, determined in accordance with the standard EN438:
- abrasion resistance EN438/6 - more than 8,000 revolutions;
- impact resistance EN438/11 - spring force ≥ 20 N;
- stain resistance EN438/15 - greater than class 4;
- resistance to cigarette burns EN438/18 - greater than class 3;
- resistance to scratching EN438/14 - force ≥ 3N.

With regard to impact resistance, tests carried out by the Applicant also show that the use of veneer layers 3 based on wood slices means that, even if an impact brings about localized yielding, this appears basically in the form of a local deformation of the flooring, without breakage around the region subjected to impact. In contrast, breakages of this type do appear, together with an unpleasant aesthetic effect, in laminate-based coverings comprising paper layers and, in particular, in coverings (such as floorings) in which the appearance of wood is simulated by the insertion of printed paper having a photographic reproduction of the appearance of wood veneer.

Moreover, with regard to the production of engagement elements, for example, of the male and female type, as indicated schematically 7 and 8 in Figure 3, the general compactness of the structure according to the invention (in the sense of an intrinsic resistance to delamination) has been found to be particularly advantageous with regard to mechanical working operations to form the complementary coupling elements. Above all, these coupling elements can be formed with particular accuracy so as to give rise to a shaped coupling which is very precise, particularly in the connecting regions (see, for example, the region schematically indicated 9 in Figure 3) between adjacent elements (strips, tiles, etc.). This very close-fitting shaped coupling is such as to resist very effectively any moisture penetration into the connecting regions between adjacent elements. This characteristic is particularly advantageous when the structure according to the invention is used to produce floorings, which have been found to be particularly resistant to washing operations and/or cleaning with liquid detergents.

Naturally, the principle of the invention remaining the same, the details of construction and forms of embodiment may be varied widely with respect to those described and illustrated, without thereby departing from the scope of the present invention.

## Claims

1. A covering structure comprising, in a generally symmetrical arrangement:
- a core layer (2) of bonded wood-based material having two opposed faces,
- two veneer layers (3) glued (4) to the opposed faces of the core layer (2), respectively, and
- two layers (5), impregnated with resin which can be hardened, and applied to the veneer layers (3), respectively.

2. A structure according to Claim 1, characterized in that it further comprises a base layer (6) of cork applied to one of the impregnated layers (5).

3. A structure according to Claim 1 or Claim 2, characterized in that the core layer (2) is constituted by a material selected from the group constituted by: MDF, HDF and chipboard.

4. A structure according to any one of the preceding claims, characterized in that the core layer (2) is bonded by means of a urea-formaldehyde resin.

5. A structure according to any one of the preceding claims, characterized in that the resin which can be hardened is a melamine resin.

6. A structure according to any one of the preceding claims, characterized in that the veneer layers (3) are made of wood free of resin impregnation.

7. A structure according to any one of the preceding claims, characterized in that the veneer layers (3) have a weight per unit area of between approximately 300 and 600 g/m².

8. A structure according to any one of the preceding claims, characterized in that the veneer layers (3) have a thickness of between approximately 5 and 8 tenths of a millimetre.

9. A structure according to any one of the preceding claims, characterized in that the veneer layers (3) are glued to the core layer (2) with urea/formaldehyde glue.

10. A structure according to any one of the preceding claims, characterized in that the veneer layers (3) are glued to the core layer (2) with vinyl glue.

11. A structure according to any one of the preceding claims, characterized in that the impregnated layers (5) have a weight per unit area of between approximately 120 and 200 g/m².

12. A structure according to any one of the preceding claims, characterized in that at least one of the impregnated layers (5) incorporates, as a filler, a material, such as, for example, corundum, for improving resistance to mechanical stresses.

13. A structure according to Claim 12, characterized in that the layer incorporating the filler is transparent and possibly coloured.

14. A structure according to Claim 2 and any one of Claims 12 and 13, characterized in that, of the two impregnated layers (5), the layer (5) incorporating the filler is that which is remote from the base layer (6).

15. A structure according to any one of the preceding claims, characterized in that it is in the form of separate elements which can be coupled with one another by shaped coupling means (7, 8).

16. A structure according to Claim 15, characterized in that the coupling means are constituted by male and female elements (7, 8).

17. A method for the manufacture of a covering structure according to any one of the preceding claims, characterized in that it comprise the steps of:
- gluing the veneer layers (3) to the core layer (2),
- applying the impregnated layers (5) to the veneer layers (3), and
- subjecting the laminar structure thus produced to heat and pressure so as to bring about hardening of the resin.

18. A method according to Claim 17, characterized in that it comprises the step of placing the base layer (6) against one of the impregnated layers (5) before the application of heat and pressure so that, after the application of heat and pressure, the base layer (6) is anchored to the structure (1) as a result of the hardening of the resin.

19. A method according to Claim 17 or Claim 18, characterized in that it comprises the step of subjecting the face of at least one of the veneer layers (3) which faces away from the core layer (2) to smoothing (L) before the application of the respective impregnated layer (5).

20. A method according to any one of Claims 17 to 19, characterized in that it further comprises the step of dividing the structure into separate elements such as tiles or strips.

21. A method according to Claim 20, characterized in that it further comprises the step of providing the separate elements with shaped coupling means (7, 8).

22. A method according to Claim 21, characterized in that it comprises the step of providing the coupling means in the form of male and female elements (7, 8).

23. An intermediate product of the method according to any one of Claims 17 to 22, the intermediate product comprising the core layer (2) bearing the veneer layers (3) glued to its opposed faces.

24. An intermediate product according to Claim 23, characterized in that at least one of the veneer layers (3) has a smoothed outer surface.

25. An intermediate product according to Claim 23 or Claim 24, characterized in that it comprises respective layers of urea/formaldehyde glue (4) which connect the veneer layers (3) to the core layer (2).

26. An intermediate product according to Claim 23 or Claim 24, characterized in that it comprises respective layers of vinyl glue (4) which connect the veneer layers (3) to the core layer (2).
